# EUROPÄISCHE PATENTSCHRIFT

(11) **EP 2 331 386 B1**
(45) Veröffentlichungstag und Bekanntmachung des Hinweises auf die Patenterteilung: **24.07.2013**
(21) Anmeldenummer: 09771318.4
(22) Anmeldetag: 22.09.2009
(51) Int. Cl.: B62D 21/20, B62D 43/00

(54) **NUTZFAHRZEUGANORDNUNG MIT ERSATZRADHALTERUNG UND HALTEVORRICHTUNG HIERFÜR**
UTILITY VEHICLE ARRANGEMENT WITH SPARE WHEEL HOLDER, AND RETAINING DEVICE THEREFOR
SYSTEME POURVU D'UN DISPOSITIF DE RETENUE DE ROUE DE SECOURS POUR UN VEHICULE UTILITAIRE ET DISPOSITIF DE RETENUE POUR LEDIT SYSTEME

(30) Priorität: 23.09.2008 DE 102008042295; 17.10.2008 DE 102008052224
(43) Veröffentlichungstag der Anmeldung: 15.06.2011
(73) Patentinhaber: Schmitz Cargobull Gotha GmbH, 99867 Gotha (DE)
(72) Erfinder: ADLER, Alfred, 89537 Giengen (DE); KRAUS, Benjamin, 89177 Ballendorf (DE); JOSEFOWITSCH, Ulrich, 01259 Dresden (DE); VOLZ, Siegfried, 89610 Oberdischingen (DE)
(74) Vertreter: Baur & Weber Patentanwälte
(86) Internationale Anmeldenummer: PCT/EP2009/062281
(87) Internationale Veröffentlichungsnummer: WO 2010/034723

(56) Entgegenhaltungen:
- EP-A1- 1 031 498
- EP-A1- 1 541 454
- DE-U- 7 340 836
- US-A- 3 724 731

## Beschreibung

Die Erfindung betrifft eine Nutzfahrzeuganordnung mit einer Ersatzradhalterung sowie eine Haltevorrichtung hierfür.

Für die Unterbringung wenigstens eines Ersatzrades an einem ein Chassis mit zwei seitlich beabstandeten Längsträgern aufweisenden Nutzfahrzeug, insbesondere an einem Anhänger, ist das Ersatzrad typischerweise mit im wesentlichen vertikaler Ausrichtung seiner Drehachse gehalten.

Bei Ausführungen mit einer korbartigen Aufnahme, in welcher das Ersatzrad einliegt und welche um eine Schwenkachse zwischen einer angehobenen Transportstellung und einer abgesenkten Wechselstellung schwenkbar gehalten ist, muss der Benutzer das Gewicht des Ersatzrades mit erheblichem Krafteinsatz bewältigen. Wenn das Ersatzrad in der Transportstellung nicht wie z. B. in der DE 10 2004 036 632 A1 zwischen den Längsträgern des Chassis gehalten ist, sondern wie z. B. in der WO 92/00871 A1 unterhalb eines Längsträgers liegt, reduzieren solche Ausführungen auch stark die Bodenfreiheit der Fahrzeuganordnung.

Zur Reduzierung des Krafteinsatzes ist es gebräuchlich, Hebeeinrichtungen, insbesondere Seilwindenanordnungen einzusetzen, welche mit dem Chassis verbunden und über eine Handkurbel betätigbar sind. Ein mittels einer Seilwinde relativ zu dem Chassis höhenverlagerbarer Radträger ist lösbar mit dem Ersatzrad, insbesondere dessen Radscheibe verbunden und in der angehobenen Stellung vorzugsweise über Schraubverbindungen in relativ zum Chassis definierter Position festlegbar.

In einer aus der DE 2849142 bekannten Anordnung ist an einem Längsträger eines Nutzfahrzeugchassis seitlich eine Konsole angeschraubt, welche mit einem Bügelschenkel seitlich nach außen ragt und ein feststehendes erstes Traversenteil und eine Zugseilanordnung mit einer linear verschiebbaren Spindel aufweist. Ein zweites Traversenteil liegt unterhalb der Radscheibe und ist mittels des Zugseils in der Höhe verlagerbar. In angehobener Stellung des Ersatzrads können lösbare Schraubbolzen von dem durch Öffnungen des oberen Traversenteils in Gewindebohrungen des unteren Traversenteils eingeschraubt und auf diese Weise kann das Ersatzrad in der Transportstellung festgelegt werden. Bei einer aus der WO 97/08039 A1 bekannten ähnlichen Anordnung mit einer seitlich an einem Längsträger angeschweißten Konsole ist als Hebeeinrichtung eine Seilwinde mit Schneckenantrieb vorgesehen. Bei einer aus der DE 7513192 U1 bekannten Reserveradhalterung an Lastkraftwagen ist anstelle einer einseitig am Längsträger befestigten Konsole eine U-förmige Halterung vorgesehen, welche den Längsträger seitlich umgreift und mit diesem verschweißt ist. Eine Bodenplatte der U-förmigen Halterung trägt zwei nach unten ragende Schraubbolzen, welche in Schraubenlöcher der Radscheibe eingreifen. Die DE 43 00 554 A1 zeigt eine Ersatzradhalterung mit Seilwinde und Verschraubung zweier Traversenteile bei mittiger Anordnung des Ersatzrades bezüglich der Längsträger.

Aus der DE 2109959 B ist eine Reserveradhalterung bekannt, bei welcher ein Haltewinkel an einen Längsträger eines Fahrzeugchassis angeschweißt ist. Ein Ersatzrad ist mit dem Rand der zentralen Radscheibenöffnung in einen haken einhängbar und über eine Kippbewegung in eine angehobene Position verlagerbar, in welcher eine Fixierung mittels Schrauben durch die Schraubenlöcher der Radscheibe erfolgen kann. Eine Halterung mit einer Kippbewegung des Ersatzrads zwischen der angehobenen Transportstellung und der abgesenkten Wechselstellung ist auch aus der DE 7340836 U1 bekannt, aber mechanisch relativ aufwendig.

Bei einer aus der EP 1 031 498 A1 bekannten Ersatzradhalterung ist ein Tragwinkel an den Vertikalsteg eines Chassis-Rahmens angeschraubt. An dem von dem Chassis abstehenden Winkelschenkel sind eine Gewindespindel als Hebeeinrichtung und mehrere Befestigungsschrauben zur Festlegung eines Radträgers mit dem Ersatzrad vorgesehen.

Die FR 2 727 078 A1 zeigt eine Ersatzradanordnung, bei welcher eine nach unten offene U-förmige Konsole an dem vertikalen Steg eines U-förmigen Längsträgers befestigt ist und quer zu diesem nach außen ragt. Ein Radträger, welcher in die zentrale Öffnung der Ersatzradscheibe eingehängt und mittels einer in der Konsole angeordneten Seilwinde höhenverlagerbar ist, weist zwei horizontal beabstandete Bolzen auf. Die vertikalen Seitenschenkel der Konsole besitzen an ihren Unterkanten schräge Führungsnuten, in welche die Bolzen beim Hochziehen des Ersatzrades eingreifen. Mittels einer von der Fahrzeugseite zugänglichen Schraube wird einer der Bolzen in Richtung des Nutengrunds einer der Führungsnuten gedrückt und dabei die Radscheibe gegen die Unterkante der Konsole gezogen.

Der vorliegenden Erfindung liegt die Aufgabe zugrunde, eine Nutzfahrzeuganordnung mit einer vorteilhaften Ersatzradanordnung sowie eine Haltevorrichtung dafür anzugeben.

Eine erfindungsgemäße Lösung ist im unabhängigen Anspruch beschrieben. Die abhängigen Ansprüche enthalten vorteilhafte Ausgestaltungen und Weiterbildungen der Erfindung.

Die Kombination der Festlegung des Radträgers bezüglich des Chassis durch den Benutzer von einer Seite des Trägers, insbesondere einer von der Mittellängsebene weg weisenden Seite eines Längsträgers, mit der Überlappung der zentralen Öffnung der Radscheibe des Ersatzrades mit dem Träger in vertikaler Projektion führt zu einer besonders vorteilhaften Anordnung, insbesondere bei einem Anhängerchassis mit typischerweise größerem maximalem Abstand der Längsträger als bei Motorfahrzeugen. Als Längsträger seien bei gegebenenfalls mehr als zwei Längsträgern die auch das Fahrwerk abstützenden HauptLängsträger betrachtet.

Die Anordnung des wenigstens einen drehbaren Schraubelements der lösbaren Verschraubung zwischen höhenverlagerbarem Radträger und dem feststehenden Halteteil oberhalb des Reifens des Ersatzrads, d. h. in einer Höhe über der durch die Oberseite des Reifens bestimmten Ebene, erfordert zwar eine über diese Ebene hinaus ragende Form des Radträgers, ermöglicht aber eine besonders vorteilhafte Handhabung des Ersatzrads, indem der Zugriff auf das wenigstens eine drehbare Schraubelement sicherheitstechnisch günstig immer oberhalb des Ersatzrades erfolgt und durch den seitlich des Fahrzeugs befindlichen Benutzer gut einsehbar ist. Vorzugsweise verläuft die Schraubachse des drehbaren Schraubelements im wesentlichen horizontal, wodurch vorteilhafterweise die Gewichtskraft des Ersatzrades von der axialen Haltekraft der Schraubverbindung entkoppelt ist. In einer besonders vorteilhaften Ausführung ist eine Ausrichtung der Schraubachse horizontal quer zur Längsrichtung des Längsträgers vorgesehen, wodurch die Betätigung des drehbaren Schraubelements mittels eines gängigen Werkzeugs, insbesondere eines gebräuchlichen Radkreuzes sich von der Seite des Fahrzeugs aus besonders einfach gestaltet. Als Ort der Befestigung der Haltevorrichtung am Chassis ist vorzugsweise einer der Längsträger, insbesondere ein vertikaler Steg eines solchen Längsträgers vorgesehen, es ist aber auch eine Befestigung an einem anderen Chassis-Teil, insbesondere einem Querträger möglich. Vorzugsweise liegt das wenigstens eine Schraubelement in vertikaler Richtung, d. h. in der Höhe, in dem von dem Längsträger, insbesondere einem von einem vertikalen Steg eines Längsträgers eingenommenen Bereich. Der Längsträger kann insbesondere C-förmig oder H-förmig mit einem Obergurt, einem Untergurt und einem diese verbindenden vertikalen Steg ausgeführt sein.

Das drehbare Schraubelement der Schraubverbindung zur Festlegung des Radträgers relativ zum Chassis ist vorteilhafterweise mit einer Gewindebohrung versehen und vorzugsweise als Schraubenmutter ausgeführt und weist vorteilhafterweise einen Werkzeugansatz auf, welcher mit einem Werkzeug für die Radmuttern kompatibel ist, so dass bei einem eventuell notwendigen Radwechsel dasselbe Werkzeug für die Radmuttern und für das Schraubelement benutzt werden kann. Das feststehende Gegenschraubelement ist vorteilhafterweise als ein Gewindebolzen ausgeführt, welcher vorzugsweise durch eine Schraube gegeben sein kann. Eine Verdrehsicherung der Schraube kann z. B. durch ein Einpressen eines gerändelten Schraubenschaftes in eine Bohrung und/oder eine Drehsperre eines Mehrkant-Schraubenkopfes gegeben sein.

Die Schraubverbindung ist vorteilhafterweise durch einen vertikalen Steg eines Längsträgers mit C-förmigem oder vorzugsweise H-förmigem Querschnitt hindurch geführt sein. Vorteilhafterweise kann auf der der Fahrzeugmitte zuweisenden Seite des Längsträgers im Bereich der Verschraubung eine Verstärkungsstruktur vorgesehen sein, welche im einfachsten Fall eine Platte sein kann, in bevorzugter Ausführung eine von einer ebenen Form abweichende dreidimensionale Struktur bildet.

Vorteilhafterweise enthält die Haltevorrichtung eine bezüglich des Längsträgers feststehende Verbindungsanordnung, über welche die Befestigung des Radträgers mittels der Verschraubung erfolgt und/oder welche ein weitere Funktion bei der Halterung des Ersatzrades übernehmen kann. Eine solche weitere Funktion kann insbesondere darin bestehen, über gesonderte Tragelemente das Gewicht des Ersatzrades, insbesondere unabhängig von der Verschraubung, abzustützen und/oder über Führungselemente den Radträger beim Anheben des Rades in eine für die Verschraubung geeignete Endposition zu führen. Elemente der Tragstruktur und/oder der Gegenstruktur und/oder der Verschraubung können auch mehr als eine der genannten Funktionen übernehmen. Insbesondere können die Führungsstrukturen einheitlich mit den Tragstrukturen ausgeführt sein. Die Verschraubungselemente sind vorzugsweise funktional von den Führungsstrukturen und/oder den Tragstrukturen getrennt.

Der Radträger liegt vorteilhafterweise mit einer Traverse oder dergleichen an der Unterseite der Radscheibe in der Transportstellung des Ersatzrades an. Der Radträger ist dabei vorteilhafterweise mit seinem unterhalb der Radscheibe liegenden Abschnitt (Traverse) mittels durch wenigstens zwei Schraubenlöcher der Radscheibe geführten Schraubverbindungen mit dem Ersatzrad lösbar verbunden. Vorteilhafterweise ragt ein zur Befestigung des Radträgers in zum Chassis fester Transportstellung dienender Befestigungsabschnitt durch die zentrale Öffnung der Radscheibe in der Transportstellung nach oben.

Vorteilhafterweise sind für die Vertikalposition der Radscheibe bzw. eines diese tragenden Abschnitts des Radträgers wenigstens zwei unterschiedliche Stellungen wählbar, wobei vorteilhafterweise gleiche Bauteile der Halterung für unterschiedliche Eindrucktiefen der Radscheibe einsetzbar sind. Dies kann z. B. dadurch gegeben sein, dass die Verbindung zwischen Radträger und Chassis in zwei verschiedenen Höhenpositionen des Radträgers zulässig ist und hierfür insbesondere Elemente der Verschraubung und/oder der Tragstruktur und/oder der Führungsstruktur in wenigstens zwei verschiedenen Vertikalpositionen am Chassis oder innerhalb einer zwischen Radträger und Chassis ortsfest angeordneten Verbindungsanordnung vorgesehen sind. In anderer vorteilhafter Ausführung ist der Radträger in wenigstens zwei Abschnitte unterteilt, welche relativ zueinander in wenigstens zwei verschiedenen Positionen entsprechend zwei verschiedenen Höhen des Radträgers über der Radscheibe zusammensetzbar sind.

Vorzugsweise sind mehrere, insbesondere genau zwei lösbare drehbare Schraubenelemente voneinander beabstandet zur Festlegung des Radträgers bezüglich des Chassis vorgesehen, welche in bevorzugter Ausführungsform mit quer zur Längsrichtung des Längsträgers ausgerichteten Schraubenachsen vorteilhafterweise voneinander beabstandete, insbesondere zueinander parallele Schraubenachsen besitzen.

In besonders vorteilhafter Weiterbildung kann vorgesehen sein, die Haltevorrichtung als einen den Längsträger um dessen Untergurt umgreifenden Bügel zu gestalten, welcher im Transportzustand des Ersatzrades sowohl auf der nach außen weisenden Seite des Längsträgers mit dem Längsträger, vorzugsweise mit dessen vertikalem Steg fest verbunden ist, und welcher zusätzlich auf der dem Benutzer abgewandten, zur Fahrzeugmitte hin weisenden Seite des Längsträgers mit dem Chassis, vorzugsweise wiederum mit dem vertikalen Steg des Längsträgers fest verbunden ist. Der Bügel kann hierbei in vorteilhafter Ausführung eine zweigeteilte Verbindungsanordnung mit einem ersten, an der nach außen weisenden Seite des Längsträgers befestigten ersten Verbindungsteil und einem zweiten, bezüglich des Längsträgers auf der dem Benutzer abgewandten Seite angeordneten zweiten Verbindungsteil enthalten, welche in der Transportstellung durch den Radträger verbunden und zu der Bügelform ergänzt sind. In bevorzugter Ausführungsform wird der Radträger lediglich mit dem ersten Verbindungsteil fest verbunden, vorzugsweise verschraubt, und liegt an dem zweiten Verbindungsteil nur an einer gegebenenfalls mehrteiligen Abstützfläche an. Dabei sind zweites Verbindungsteil und Radträger vorteilhafterweise durch elastische Verformung eines oder beider Bauteile elastisch gegeneinander verspannt. Die an der Abstützfläche durch die elastische Verspannung wirkende Vorspannungskraft ist vorzugsweise zumindest überwiegend vertikal gerichtet und wirkt auf dem Radträger nach unten. Insbesondere können zweites Verbindungsteil und Radträger horizontal verschiebbar an der Abstützfläche aneinander anliegen. An der Abstützfläche oder einer anderen Stelle des Bügelverlaufs kann elastisch verformbares, schwingungsdämpfendes Material zwischen metallischen Flächen, z. B. von zweitem Verbindungsteil und Radträger eingefügt sein. Die Vertikalkomponente der Vorspannungskraft beträgt vorteilhafterweise ein Mehrfaches, insbesondere wenigstens das 5-fache der Gewichtskraft eines typischen Ersatzrades. Die Vorspannung entsteht vorteilhafterweise dadurch, dass beim Vorgang, das an dem Radträger befestigte Ersatzrad in die Transportstellung zu bringen, zuerst Radträger und zweites Verbindungsteil im Bereich der Abstützfläche in einer Zwischenstellung lose ohne Vorspannungskraft zur Anlage gebracht und dabei zugleich ein noch loser Eingriff der Befestigungsstrukturen zwischen Radträger und zweitem Befestigungsteil hergestellt werden, und dass durch nachfolgendes Herstellen der festen Verbindung zwischen Radträger und erstem Verbindungsteil, insbesondere durch Anziehen von Verschraubungen, der Radträger relativ zu erstem und/oder zweitem Verbindungsteil in die Transportstellung verlagert und dabei die Vorspannung erzeugt wird.

Die Abstützfläche liegt vorteilhafterweise unterhalb des Untergurts des Längsträgers, insbesondere innerhalb der Radfelge, vorzugsweise innerhalb der zentralen Öffnung der Radscheibe.

Bei einem Nutzfahrzeugchassis, insbesondere einem Sattel-Containerchassis, bei welchem Längsträger in einem hinteren Bereich parallel zueinander und zu der die Längsrichtung des Chassis bildenden Haupt-Fahrtrichtung mit einem ersten gegenseitigen Abstand verlaufen und in einem in Haupt-Fahrtrichtung davor liegenden Übergangsbereich einen schrägen Verlauf in Richtung der Mittellängsebene der Fahrzeuganordnung unter Verringerung des gegenseitigen seitlichen Abstands aufweisen, wie dies insbesondere bei sogenannten Gooseneck-oder HC-Container-Chassis auftritt, ist die Ersatzradanordnung nach der Erfindung in Haupt-Fahrtrichtung in dem Übergangsbereich angeordnet, wobei das Ersatzrad vorteilhafterweise an nur einem Längsträger gehalten und so positioniert ist, dass die zentrale Öffnung der Radscheibe mit dem Längsträger in vertikaler Projektion überlappt und dass die Anordnung von zwei Ersatzrädern seitlich nebeneinander die Breite des übrigen Fahrzeugaufbaus nicht überragt. Vorzugsweise liegt der Mittelpunkt des Ersatzrades (als Mittelpunkt des kreisförmigen Radumfangs) in vertikaler Projektion innerhalb des von dem Längsträger abgedeckten Bereich oder weniger als eine Längsträgerbreite, vorzugsweise weniger als eine halbe Längsträgerbreite von der Vertikalprojektion des Längsträgers beabstandet. Hierdurch ist vorteilhafterweise ein auf die Verschraubung wirkendes Kippmoment besonders gering. Insbesondere bei einem Längsträger mit Obergurt, Untergurt und vertikalem Steg in einem H-förmigen Querschnitt kann der Radträger vorteilhafterweise eine Aussparung zu dem Untergurt hin aufweisen und diesen mit der Verbindung zu der Radscheibe untergreifen. Die Radscheibe des Ersatzrades kann auch außermittig mit dem Radträger verbunden sein, um den Mittelpunkt des Ersatzrades unter den Untergurt des Längsträgers zu verlagern.

Vorteilhafterweise kann die Ersatzradanordnung zwei Ersatzräder enthalten, welche quer zur Haupt-Fahrtrichtung nebeneinander in je einer Seitenhälfte des Chassis, vorzugsweise jeweils von der Mittellängsebene des Chassis beabstandet, an jeweils einem der Längsträger gehalten sind. Dabei kann insbesondere ein erstes Ersatzrad für einen Anhänger und ein zweites Ersatzrad für ein Zugfahrzeug vorgesehen sein. Insbesondere können die beiden Ersatzräder jeweils an einem Längsträger in dem vor einem Heckbereich liegenden Übergangsbereich eines Chassis mit schräg verlaufenden Längsträgerabschnitten angeordnet sein, insbesondere in zumindest annähernd gleicher Position in Haupt-Fahrtrichtung. Die beiden Ersatzräder sind unabhängig voneinander vom Chassis lösbar.

Bei einem Nutzfahrzeug mit anderer Chassis-Geometrie ohne einen Übergangsabschnitt mit sich verringerndem seitlichem Abstand der beiden Längsträger, z.B. bei einem Fahrzeugschassis mit durchgehend parallelen Längsträgern, welcher z.B. bei Zugfahrzeugen typischerweise geringer ist als bei Anhängern, kann die Haltevorrichtung selbstverständlich auch an anderer Position, vorzugsweise wiederum an einem der Längsträger angeordnet sein. Die Anordnung in einem Übergangsbereich wie beschrieben ist besonders vorteilhaft für Anhängerchassis mit einem solchen Übergangsbereich.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Draufsicht auf ein Container-Chassis,
- Fig. 2: eine Seitenansicht des Container-Chassis,
- Fig. 3: einen Ausschnitt aus Fig. 2,
- Fig. 4: eine Seitenansicht zu Fig. 3,
- Fig. 5: eine Schrägansicht eines Ersatzradbereichs,
- Fig. 6: einen vergrößerten Ausschnitt aus Fig. 5,
- Fig. 7: die Anordnung nach Fig. 6 bei abgesenktem Ersatzrad,
- Fig. 8: eine erste Ausführung einer Haltevorrichtung,
- Fig. 9: die Haltevorrichtung nach Fig. 8 von der Rückseite aus gesehen,
- Fig. 10: eine Seitenansicht der Haltevorrichtung nach Fig. 8,
- Fig. 11: eine Schrägansicht einer weiteren vorteilhaften Ausführungsform einer Haltevorrichtung,
- Fig. 12: die Haltevorrichtung nach Fig. 11 im montierten Zustand mit einem Ersatzrad,
- Fig. 13: eine weitere Ausführungsform einer Haltevorrichtung,
- Fig. 14: eine bevorzugte Ausführung einer Haltevorrichtung in Schrägansicht,
- Fig. 15: eine Seitenansicht der Haltevorrichtung nach Fig. 14,
- Fig. 16: eine Ansicht der Haltevorrichtung nach Fig. 14, von der Benutzerseite her,
- Fig. 17: eine Rückseitenansicht zu Fig. 16,
- Fig. 18: die Haltevorrichtung nach Fig. 14 in anderer Vertikalposition,
- Fig. 19: eine Zwischenposition bei der Befestigung der Haltevorrichtung.
- Fig. 20: eine Anordnung einer Haltevorrichtung an einem Querträger

In den nachfolgenden Figuren sind teilweise rechtwinklige Koordinatensysteme zur relativen Zuordnung einzelner Ansichten mit eingezeichnet. Ein x-y-z-Koordinatensystem ist dabei so ausgerichtet, dass die x-Richtung mit der in Hauptfahrrichtung des Fahrzeugs verlaufenden Längsrichtung zusammen fällt und die y-Richtung die dazu rechtwinklig ausgerichtete Horizontalrichtung bildet. Die z-Richtung ist die Vertikalrichtung. In einem zweiten rechtwinkligen p-q-z-Koordinatensystem liegt die p-q-Ebene parallel zu der x-y-Ebene des ersten Koordinatensystems, die Koordinatenachsen p und q sind aber gegen die x- und die y-Koordinaten verdreht und die p-Koordinate verläuft in Längsrichtung eines Längsträgers in einem Übergangsbereich mit abnehmendem Längsträgerabstand.

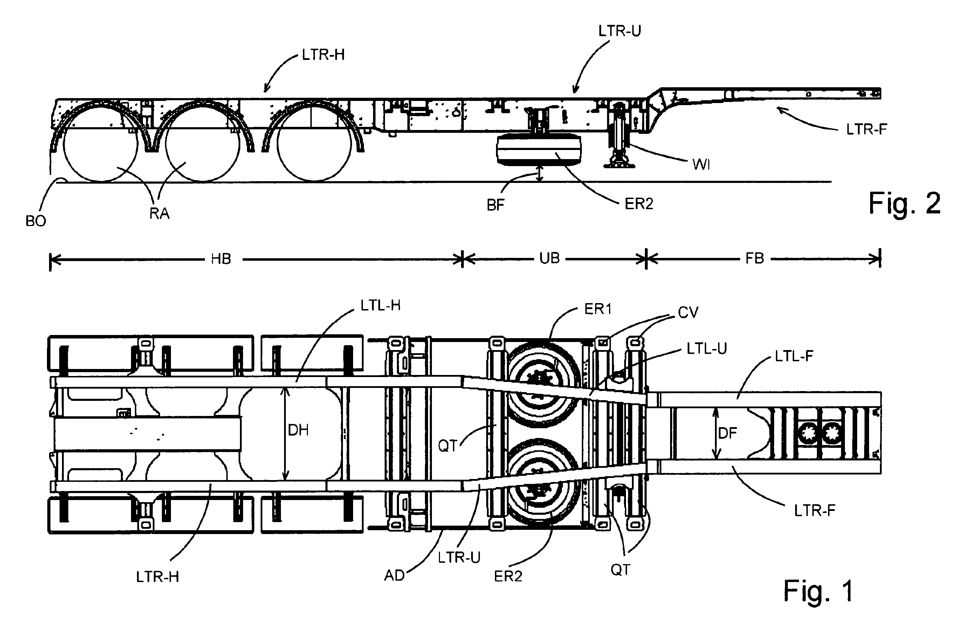

Fig. 1 zeigt eine Draufsicht auf ein Chassis eines Sattelanhängers zum Containertransport. Das Chassis enthält insbesondere zwei über die Länge des Chassis durchgehende Längsträger LTL, LTR, welche in einem hinteren Bereich, in welchem das Fahrgestell des Sattelanhängers mit dem Chassis verbunden ist, parallel zueinander in einem ersten Abstand DH verlaufen. Die Längsträger sind in den Zeichnungen auch mit Zusätzen -H, -U und -F für hintere Abschnitte, Übergangsabschnitte bzw. Frontabschnitte bezeichnet. Die Längsträger LTL, LTR verlaufen in einem Frontbereich des Chassis, in welchem auch die anhängerseitigen Sattelkupplungs-Bauteile angeordnet sind, im skizzierten Beispiel wieder parallel zueinander mit einem gegenseitigen Abstand DF, welcher kleiner ist als der Abstand DH der Längsträger im hinteren Bereich. Der Abstand DH beträgt bei einem solchen Chassis vorteilhafterweise wenigstens 40 % der Gesamtbreite des Chassis. Eine solche Verschlankung ist insbesondere bei den sogenannten Gooseneck-Chassis zum Transport von HC-Containem mit einem Tunnel im Frontbereich geeignet. Zwischen dem hinteren Bereich HB und dem Frontbereich FB verlaufen die Längsträger in einem Übergangsbereich UB schräg gegen die x-Richtung geneigt, wobei sich der in y-Richtung gemessene gegenseitige Abstand der Längsträger von hinten nach vorn kontinuierlich verringert.

Die Längsträger sind über verschiedene, zwischen ihnen verlaufende und mit ihnen verschraubte oder verschweißte Strukturen, wie insbesondere Querträger QT mit Containerverriegelungen CV untereinander verbunden, wobei eine teilweise über den Ersatzrädern ER1, ER2 nur mit Umrißlinien angedeutet ist. Solche die Längsträger miteinander verbindenden Strukturen sind allgemein bekannt.

Fig. 2 zeigt das Fahrzeug nach Fig. 1 in Seitenansicht auf einer Bodenfläche BO stehend. Im abgestellten Zustand kann das Chassis über eine absenkbare Stützwinde WI auf dem Boden BO abgestützt sein. Im Fahrbetrieb stützt sich der Frontbereich FB des Chassis auf einer Sattelkupplung eines Zugfahrzeugs ab. Insbesondere bei einem Chassis zum Transport von HC-Containern ist der Abstand der Längsträger im Übergangsbereich UB und im hinteren Bereich HB so klein, dass bei einer Anordnung eines Ersatzrads ER1 unterhalb der Untergurte der Längsträger nur eine geringe Bodenfreiheit BF zwischen dem Ersatzrad ER1 und dem Boden BO verbleibt. Bei der Halterung des Ersatzrads an dem Chassis sind daher bei einer solchen Anordnung eines Ersatzrads unterhalb der Längsträger auch geringe Unterschiede in der Bauhöhe einer Haltevorrichtung von großer Bedeutung. Insbesondere die gebräuchlichen Korbaufhängungen von Ersatzrädern verlaufen abschnittsweise unterhalb des Ersatzrades und engen die ohnehin geringe Bodenfreiheit BF weiter ein.

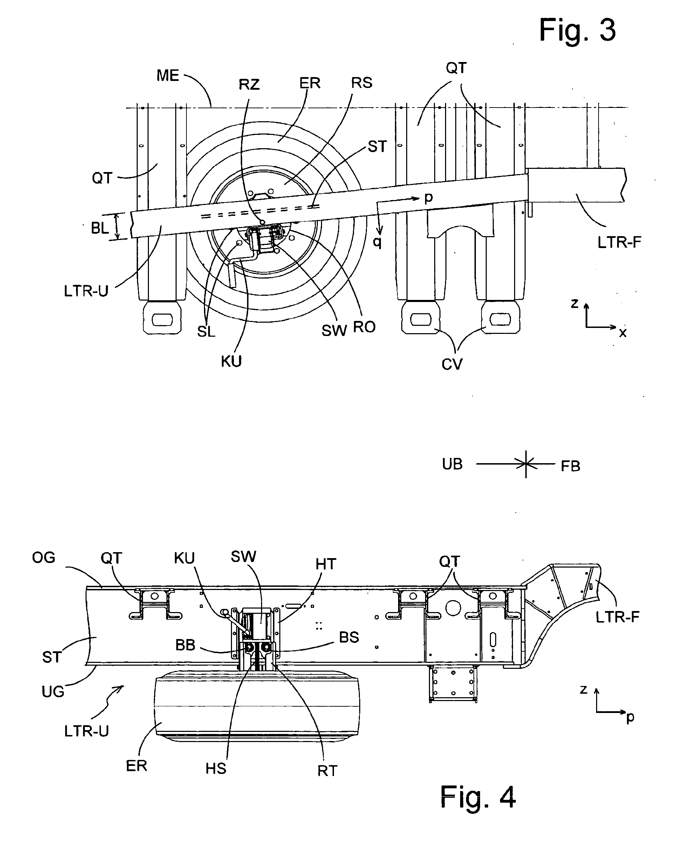

In der Ansicht nach Fig. 1 ist ein erster vorteilhafter Aspekt der Erfindung hinsichtlich der Anordnung von Ersatzrädern anschaulich erkennbar, welcher darin besteht, dass zwei Ersatzräder ER1, ER2 in y-Richtung benachbart unterhalb der Längsträger des Chassis in dem Übergangsbereich angeordnet sind und dabei in Längsrichtung so positioniert sind, dass die Mittelpunkte der Räder unterhalb der Untergurte der Längsträger im Übergangsbereich UB und in seitlicher Richtung vorteilhafterweise innerhalb der Vertikalprojektion der Untergurte oder von diesen nur um ein geringes Maß, welches vorzugsweise die Breite, insbesondere die halbe Breite BL der Untergurte nicht übersteigt, von den Längsträgern beabstandet sind (Fig. 3). Die Radmittelpunkte RZ liegen vorteilhafterweise auf der den Vertikalstegen der Längsträger zur Fahrzeugaußenseite hin weisenden Seite. Vorteilhafterweise ist jedes der beiden Räder einzeln an jeweils einem der Längsträger mit einer eigenen Haltevorrichtung HV befestigt und jedes Ersatzrad ER1, ER2 ist unabhängig von dem jeweils anderen Ersatzrad aus der jeweiligen Haltevorrichtung lösbar.

Die Positionierung der Ersatzräder in der in Fig. 1 und Fig. 2 ersichtlichen Position in dem Übergangsbereich des Chassis mit aufeinander zulaufenden Längsträgern und die Positionierung der Radmittelpunkte innerhalb oder nahe bei der Vertikalprojektion der Untergurte der Längsträger in diesem Übergangsbereich ist besonders platzsparend und ermöglicht besonders vorteilhafte Haltevorrichtungen, von welchen nachfolgend noch mehrere Beispiele im Detail beschrieben sind.

Die Ersatzräder können zur Außenseite des Fahrzeugs hin durch Abdeckungen ADL, ADR, welche auch als Unterfahrschutz dienen, abgedeckt sein.

Fig. 3 zeigt einen Ausschnitt aus einer Draufsicht auf ein Container-Chassis und zeigt insbesondere die Chassishälfte rechts von einer Mittellängsebene ME des Fahrzeugs in dem Übergangsbereich UB mit einem Ersatzrad ER. Der Längsträger LTR ist in dem Übergangsbereich UB als LTR-U und in dem anschließenden Frontbereich FB als LTR-F bezeichnet. In dem Übergangsbereich UB verläuft der Längsträgerabschnitt LTR-U schräg gegen die x-Richtung geneigt. In Fig. 3 sind zusätzliche Koordinaten p und q des bereits genannten weiteren rechtwinkligen Koordinatensystems eingetragen, wobei die Koordinate p parallel zum Längsverlauf des Längsträgerabschnitts LTR-U horizontal und die Koordinate q rechtwinklig zur Koordinate p horizontal verläuft. Mit unterbrochener Linie ist der Verlauf des Vertikalstegs ST des Längsträgers zwischen Obergurt und Untergurt des Längsträgers eingetragen.

Fig. 4 zeigt eine Ansicht des Ausschnitts nach Fig. 3 mit Blickrichtung parallel zur Koordinate q und somit horizontal senkrecht auf die Ebene des Vertikalstegs ST.

Das Ersatzrad ER ist über eine Haltevorrichtung HV an dem Längsträgerabschnitt LTR-U gehalten und liegt unterhalb des Untergurts dieses Längsträgerabschnitts. Die Haltevorrichtung enthält eine Seilwinde SW, welche durch eine Handkurbel KU betätigbar ist, um über ein Halteseil HS das Ersatzrad ER samt einem Radträger RT zwischen der in Fig. 4 skizzierten Transportstellung und einer zur Entnahme oder zum Einsetzen eines Ersatzrades abgesenkten Stellung zu verlagern. Ein Anheben des Ersatzrades durch einen Benutzer direkt von Hand mit Muskelkraft ist durch das hohe Gewicht der Ersatzräder kaum möglich. Haltevorrichtungen mit Seilwinden sind bei Ersatzrad-Haltevorrichtung an Nutzfahrzeugen prinzipiell bekannt und gebräuchlich.

In der skizzierten Transportstellung ist ein Radträger RT fest, aber lösbar mit einem Halteteil HT verbunden, vorzugsweise verschraubt. Zur Verschraubung dienen in dem skizzierten vorteilhaften Ausführungsbeispiel Befestigungsschrauben BS, welche vorteilhafterweise von der dem Benutzer in q-Richtung weisenden Seite zugänglich sind. In dem Radträger sind hierfür vorteilhafterweise Bohrungen vorgesehen, welche mit feststehenden Befestigungselementen des Halteteils zur Überdeckung gebracht werden können. Vorzugsweise ist die Drehachse der zur Befestigung des Radträgers RT an dem Halteteil HT dienenden Befestigungselemente im wesentlichen horizontal auf den Benutzer zu in q-Richtung gerichtet. Das Anziehen und Lösen solcher drehbarer Befestigungselemente, wie insbesondere Befestigungsschrauben, ist dadurch für den Benutzer besonders einfach und komfortabel. Insbesondere kann bei auf den Benutzer zuweisender Drehachse der Befestigungselemente BS vorteilhafterweise ein steckbares Werkzeug, insbesondere ein gebräuchliches Radkreuz zur Drehung der Befestigungselemente genutzt werden. Das Halteteil HT ist dauerhaft mit dem Längsträger verbunden und kann in besonders vorteilhafter Ausführung mit diesem verschraubt sein, indem durch Bohrungen des Halteteils HT und korrespondierende Bohrungen im Vertikalsteg ST des Längsträgers Schrauben hindurchgeführt sind, welche auch zusätzlich noch in vorteilhafter Weiterbildung Verstärkungselemente auf der dem Benutzer abgewandten Rückseite des Stegs ST an dem Steg halten können. Die drehbaren Befestigungselemente BS sind vorzugsweise Muttern, welche auf an dem Halteteil HT feststehend vorgegebene Schrauben oder Gewindebolzen BB aufschraubbar sind. Die bezüglich des Halteteils HT feststehenden Schrauben oder Gewindebolzen können durch weitere Bohrungen in dem Steg ST des Längsträgerabschnitts LTR-U bis zur Rückseite des Stegs hindurchgeführt sein oder können in anderer vorteilhafter Ausführung auch nur an dem Halteteil HT befestigt sein. Die Werkzeugansätze der drehbaren Befestigungselemente BS stimmen vorteilhafterweise mit den Werkzeugansätzen gebräuchlicher Radmuttern oder Radschrauben überein, so dass für diese drehbaren Befestigungselemente dasselbe Werkzeug wie für das Lösen und Befestigen eines Rades selbst benutzbar sind. Die Seilwinde SW ist dauerhaft mit dem Halteteil HT oder dem Steg ST verbunden, insbesondere verschraubt.

Zum Abnehmen des Ersatzrads ER aus der in Fig. 4 skizzierten befestigten Transportstellung werden die beispielsweise als Muttern ausgeführten drehbaren Befestigungselemente BS gelöst und der Radträger RT wird auf den Benutzer zu von den feststehenden Bolzen oder Schrauben BB abgezogen, wobei das Gewicht des Ersatzrades ER und des Radträgers RT über das zwischen der Seilwinde SW und einer Einhängung am Radträger RT verlaufende Halteseil HS aufgefangen ist und danach das Ersatzrad durch manuelles Drehen der Kurbel KU auf den Boden abgelassen wird. Dort kann das Ersatzrad ER von dem Radträger gelöst und z. B. anstelle eines defekten Rades auf einer Radnabe montiert werden. Ein Ersatzrad oder ein defektes Rad kann auf dem Boden liegend mit dem Radträger RT verbunden werden und danach wird der Radträger RT samt dem Ersatzrad mittels der Seilwinde SW über das Halteseil HS nach oben gezogen, bis der Radträger RT mit Bohrungen über die feststehenden Bolzen oder Schrauben am Halteteil HT vom Benutzer weg aufgeschoben werden kann. Danach werden die drehbaren Befestigungselemente, insbesondere Schraubenmuttern auf die feststehenden Bolzen oder Schrauben aufgedreht und der Radträger RT auf diese weise stabil und fest mit dem Halteteil HT in Transportstellung für den Fahrbetrieb verbunden. Anstelle der mit Muttern als drehbaren Befestigungselementen korrespondierenden feststehenden Schrauben oder Bolzen an dem Halteteil HT können auch an dem Halteteil HT Innengewinde vorgesehen sein, in welche Schrauben als drehbare Befestigungselemente eingeschraubt werden. Die Ausführung mit den am Halteteil HT feststehend vorgegebenen Schrauben oder Gewindebolzen ist besonders vorteilhaft dadurch, dass der Radträger vom Benutzer weg auf solche feststehenden Bauteile aufgesteckt werden kann und diese feststehenden Befestigungselemente eine Zentrierfunktion und/oder eine Tragfunktion übernehmen können.

Die Position des Radmittelpunkts RM des Ersatzrades ER liegt in q-Richtung nach Fig. 3 vorteilhafterweise innerhalb der Vertikalprojektion des Untergurts des Längsträgerabschnitts LTR-U oder um nicht mehr als eine halbe Längsträgerbreite, insbesondere Untergurtbreite BL von der Vertikalprojektion des Untergurts von diesem seitlich beabstandet. Vorzugsweise liegt der Radmittelpunkt RM in q-Richtung gegen den Vertikalsteg ST des Längsträgerabschnitts LTR-U zum Benutzer, d. h. zur Fahrzeugaußenseite hin versetzt. Der Radträger RT ist vorteilhafterweise an der Radscheibe RS des Ersatzrads, insbesondere über die vorhandenen Radschraubenlöcher SL der Radscheibe befestigt und liegt vorteilhafterweise mit einer Traverse unterhalb der Radscheibe und ragt durch die zentrale Öffnung RO der Radscheibe nach oben zu dem Halteteil HT hindurch.

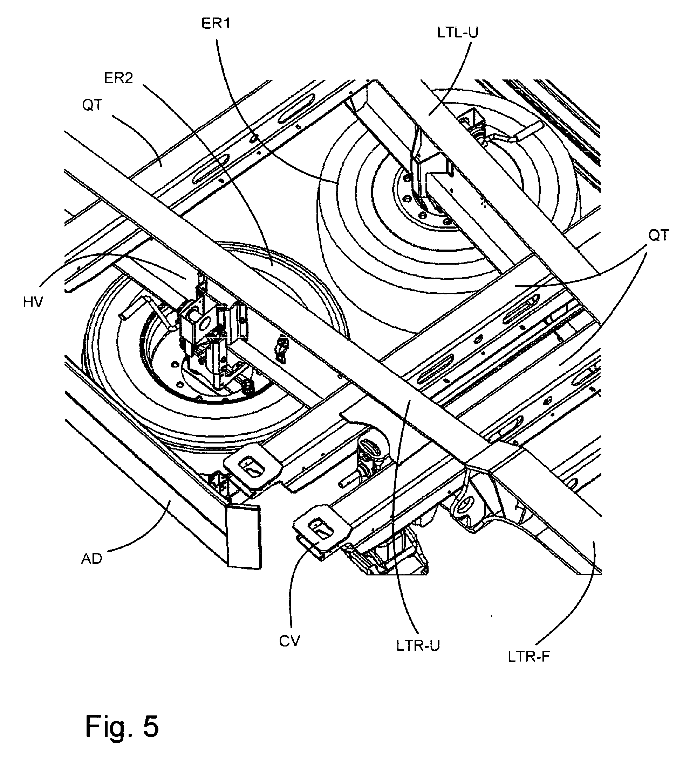

Fig. 5 zeigt in Schrägansicht eine Ersatzradanordnung mit zwei Ersatzrädern ER1, ER2, welche an je einem der beiden Längsträgerabschnitte LTL-U bzw. LTR-U des Chassis in dem Übergangsbereich UB unabhängig voneinander befestigt sind. Die oberhalb der Untergurte verlaufenden Querträger QT stellen keine Einschränkungen hinsichtlich der Positionierungen der Ersatzräder dar.

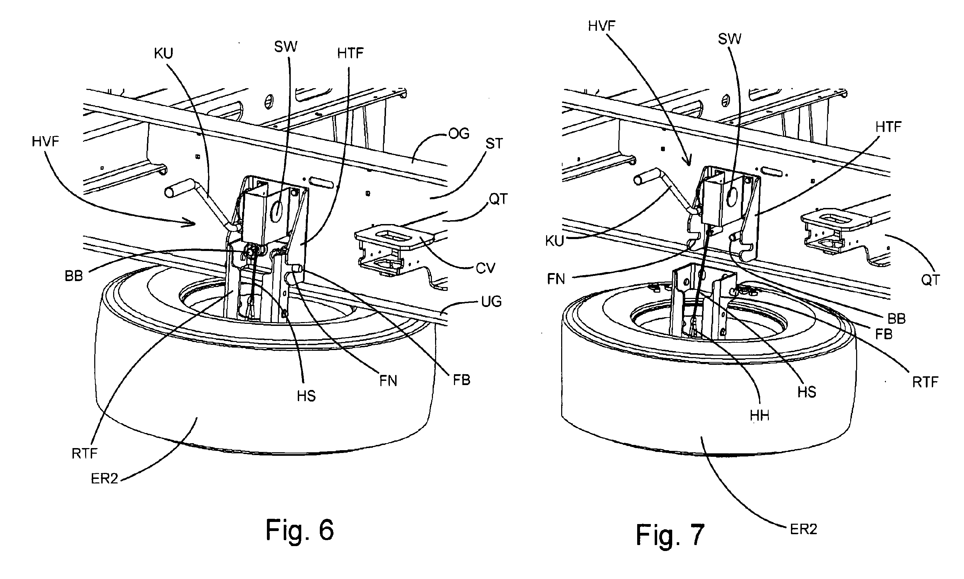

Fig. 6 zeigt eine erste vorteilhafte Ausführungsform einer Haltevorrichtung mit einem in Transportstellung befestigten Ersatzrad ER2 an einem Längsträgerabschnitt LTR-U. Die Haltevorrichtung HVF enthält ein fest mit dem vertikalen Steg ST des Längsträgerabschnitts verbundenes Halteteil HTF, an welchem ein Radträger RTF lösbar gehalten ist. Der Radträger RTF ist vorzugsweise an von dem Halteteil HF auf den Benutzer zu weisenden, feststehenden Schrauben BB mittels Schraubenmuttern als drehbaren Befestigungselementen BS befestigt. Das Halteteil HTF ist U-förmig gebogen und ragt mit zwei Seitenschenkeln quer vom Steg ST zur Fahrzeugaußenseite auf den Benutzer hin weg. In den beiden Seitenschenkeln können vorteilhafterweise Führungsnuten FN vorgesehen sein, in welche Führungsbolzen des Radträgers RTF eingreifen können, was das Aufstecken des Radträgers TRF mit Bohrungen im Radträger RTF auf die Schrauben oder Bolzen BB vereinfacht. Das Halteseil HS weist an seinem unteren Ende eine Einhängevorrichtung HH, insbesondere in Form eines leicht lösbaren Karabinerhakens auf, welcher in eine Öffnung am Radträger eingreift. Die Seilwinde SW ist auf dem mittleren Abschnitt des U-förmigen Halteteils angeordnet und zusammen mit dem Halteteil an dem vertikalen Steg ST des Längsträgerabschnitts verschraubt.

Zum Abnehmen des Ersatzrades aus der in Fig. 6 gezeigten befestigten Transportstellung werden die Schrauben BS gelöst und abgenommen und danach, gegebenenfalls nach leichtem Lockern des Halteseils HS, wird der Radträger RTF zum Benutzer hin von den feststehenden Elementen BB abgezogen, wobei die Führungsbolzen FB in den Führungsnuten FN gleiten. Nachdem die Führungsbolzen FB aus den Führungsnuten FN zum Benutzer hin ausgerückt sind und die Bohrungen in dem Radträger RTF von den Schrauben oder Bolzen BB seitlich entfernt sind, hängt das Ersatzrad ER mit dem Radträger RTF über das Halteseil HS an der Seilwinde SW. Durch Betätigen der Kurbel der Seilwinde kann das Ersatzrad auf den Boden abgelassen werden, wo der Haken HH von dem Radträger gelöst und die Verbindung zwischen dem Radträger und der Radscheibe des Ersatzrades gelöst werden kann. Danach kann das Ersatzrad zur weiteren Verwendung gehandhabt werden. In Fig. 7 ist eine solche abgesenkte Position des Ersatzrades dargestellt.

Zur Anbringung eines Ersatzrades oder defekten Rades an der Haltevorrichtung wird der Radträger mit der Radscheibe des Ersatzrades verbunden und der Haken HH in eine Öffnung oder dergleichen am Radträger RTF eingehängt. Danach wird mittels der Seilwinde der Radträger RTF samt Ersatzrad angehoben, bis die Führungsbolzen FB in die Führungsnuten FN eingeführt und die Befestigungsbohrungen FB im Radträger mit den feststehenden Bolzen oder Schrauben BB fluchten und auf diese aufgesteckt werden können. Durch Aufdrehen und Anziehen der Muttern als drehbaren Befestigungselementen BS wird der Radträger stabil und fest mit dem Halteteil HT verbunden.

Vorteilhafterweise hat der Benutzer während des Entnehmens und des Einsetzens eines Rades immer bequemen seitlichen Zugriff von der Außenseite des Fahrzeugs her. Ein Hantieren aus einer Position unterhalb des Rades ist nicht erforderlich. Die Haltevorrichtung ragt vorteilhafterweise nicht über die untere Begrenzungsebene des in Transportstellung befestigten Rades hinaus, so dass eine maximal mögliche Bodenfreiheit erhalten bleibt.

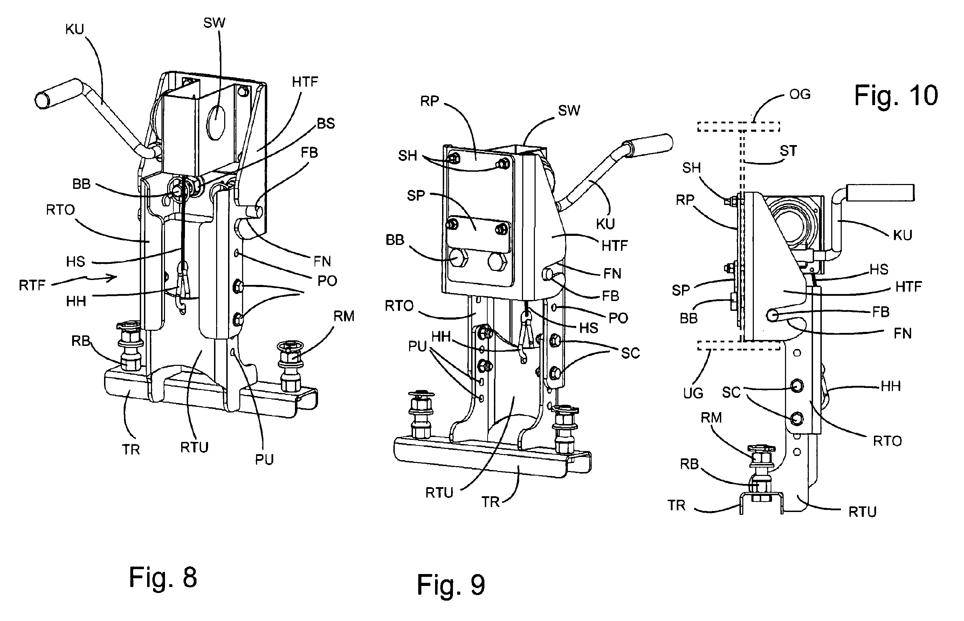

In Fig. 8 bis 10 ist die in Fig. 6 und Fig. 7 bereits dargestellte Haltevorrichtung noch im Detail dargestellt, wobei die Fig. 8 eine Schrägansicht von der Seite des Fahrzeugs, d. h. von der üblichen Benutzerposition aus zeigt. Fig. 9 zeigt eine rückwärtige Ansicht der Haltevorrichtung, wobei aus Gründen der Übersichtlichkeit und der Darstellung verschiedener Elemente der Längsträger sowohl in Fig. 8 als auch in Fig. 9 weg gelassen ist. Fig. 10 zeigt eine Ansicht der Haltevorrichtung mit Blickrichtung in q-Richtung, wobei in Fig. 10 der Längsträger mit unterbrochener Linie mit angedeutet ist.

Der Radträger RTF weist an seinem unteren Ende eine im wesentlichen horizontal verlaufende Traverse TR auf, von welcher zwei Schraubbolzen RB nach oben ragen. Bei der Verbindung des Radträgers TRF mit der Radscheibe des Ersatzrades greifen vorteilhafterweise diese Bolzen RB von unten durch in der Radscheibe für die Befestigung des Rads an einer Radnabe bereits vorhandenen Schraubenlöcher SL durch. Über Radmuttern RM wird die Traverse fest mit der Radscheibe des Ersatzrads verbunden. Der von der Traverse nach oben ragende Teil des Radträgers RTF ist in einen unteren Abschnitt RTU und einen oberen Abschnitt RTO unterteilt, welche über Schrauben SC miteinander verbunden sind. Vorteilhafterweise kann vorgesehen sein, unteren Abschnitt RTU und oberen Abschnitt RTO des Radträgers RTF in verschiedenen relativen Höhenposition miteinander zu verbinden. Hierzu enthält der obere Abschnitt RTU mehrere erste Positionierstrukturen PO und der untere Abschnitt RTU des Radträgers mehrere zweite Positionierstrukturen PU, welche vorteilhafterweise jeweils als Bohrungen ausgeführt sein können und welche innerhalb des oberen und unteren Abschnitts so angeordnet sind, dass in mehreren unterschiedlichen relativen Höhenpositionen von unterem Abschnitt RTU und oberen Abschnitt RTO erste und zweite Positionierungsstrukturen fluchten und so der untere Abschnitt RTU relativ zu dem oberen Abschnitt RTO in verschiedenen Vertikallagen über die Verschraubungen SC fixiert werden kann. Hierdurch kann vorteilhafterweise ein und derselbe Radträger für Felgen mit unterschiedlicher Eindrücktiefe der Radscheibe benutzt werden.

In der skizzierten vorteilhaften Ausführungsform ist, wie in Fig. 9 und Fig. 10 ersichtlich, vorgesehen, dass auf der dem Halteteil HTF abgewandten Rückseite des Stegs ST eine diesen und die Haltevorrichtung aussteifende Platte RP angeordnet ist, welche bei der Befestigung des Halteteils HTF an dem Steg ST durch durchgehende Befestigungsmittel mit befestigt wird. Zur Befestigung des Halteteils HTF und der Seilwinde SW an dem vertikalen Steg des Längsträgers sind Verschraubungen SH durch Befestigungsabschnitte der Seilwinde SW, den Mittelabschnitt des U-förmigen Halteteils HTF, den Steg ST und die Aussteifungsplatte RP hindurch geführt.

Im skizzierten Beispiel sind die feststehenden Befestigungselemente auf Seiten des Halteteils HTF als Schrauben ausgeführt, welche von der Rückseite der Aussteifungsplatte RP durch diese, den Steg ST und den mittleren Abschnitt des Halteteils HTF hindurch geführt und z. B. in eine Bohrung des Stegs oder des Halteteils HTF oder der Aussteifungsplatte RP eingepresst sind. Um ein Verdrehen der nur eingepressten feststehenden Befestigunsgelemente BB zu verhindern, können diese einen Kopf mit abgeflachten Umfangsabschnitten, insbesondere nach gebräuchlicher Art eines Außen-Sechskant-Kopfes besitzen und eine auf die Aussteifungsplatte RP zusätzlich noch aufgesetzte Sicherungsplatte SP liegt mit einer Unterkante an jeweils einem flachen Umfangsabschnitt der Schrauben BB an und verhindert ein Verdrehen der Schrauben beim Anziehen oder Lösen der drehbaren Befestigungselemente BS von der Seite des Benutzers her. In Fig. 9 ist auch gut die Reihe der zweiten Positionierungsstrukturen PU als Lochreihe in dem unteren Teil RTU des Radträgers erkennbar.

Aus der Ansicht nach Fig. 10 ist die Lage des mit unterbrochener Linie eingezeichneten Längsträgerabschnitts mit Untergurt UG, Obergurt OG und vertikalem Steg ST ersichtlich, wonach das Halteteil HTF in vertikaler Richtung nahe bei dem Untergurt UG angeordnet ist und der Steg ST zwischen dem Mittelabschnitt des Halteteils HTF und der rückseitigen Aussteifungsplatte RP liegt.

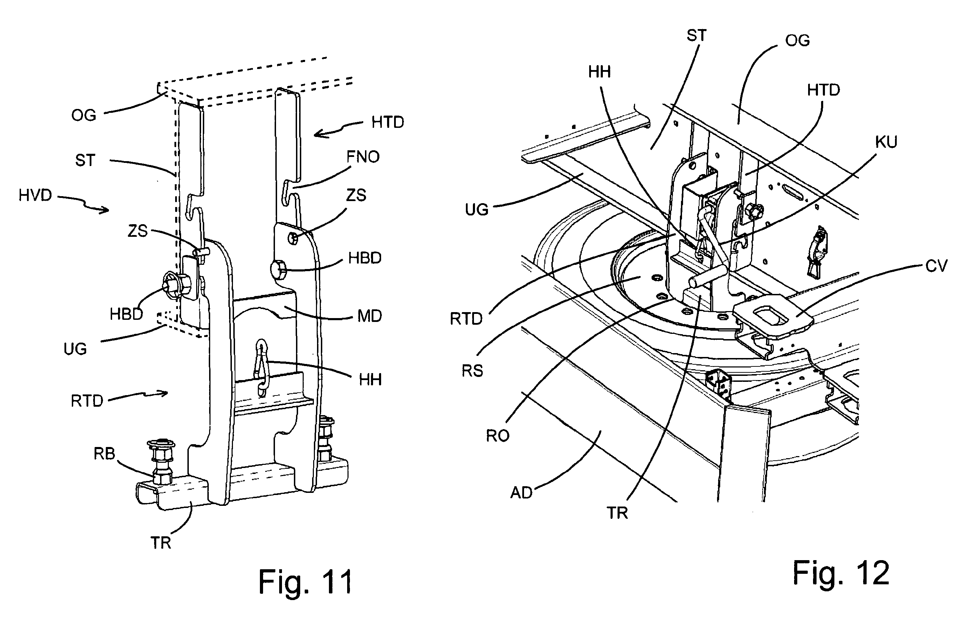

Fig. 11 zeigt eine weitere vorteilhafte Ausführung einer Haltevorrichtung HFT, bei welcher ein in vertikaler Draufsicht U-förmiges Halteteil HTD zwei von dem Steg ST des mit unterbrochener Linie angedeuteten Längsträgerabschnitts absteht. Die beiden seitlichen Schenkel sind über ein von dem Steg ST beabstandetes Mittelteil MD verbunden. Die Seitenschenkel des Halteteils HTD sind mit ihren an dem Steg ST anliegenden Kanten vorteilhafterweise mit dem Steg verschweißt. Das Halteteil HTD erstreckt sich in diesem Beispiel über die gesamte Höhe des Stegs ST zwischen Obergurt OG und Untergurt UG des Längsträgerabschnitts. Das Halteteil HTD kann auch zusätzlich mit Untergurt und Obergurt verschweißt sein.

Ein Radträger RTD, welcher wieder eine Traverse TR mit nach oben weisenden Schraubbolzen RB aufweist und über einen Haken HH an das Halteseil anhängbar ist, weist zwei flache Seitenteile auf, welche mit ihren in p-z-Ebenen liegenden Flächen parallel zu den beiden Seitenschenkeln des Halteteils HTD verlaufen und im skizzierten Beispiel in p-Richtung zwischen den beiden Seitenschenkeln des Halteteils HTD an diesen anlegbar sind. Die Seitenteile des Radträgers RTD ragen über den Mittelabschnitt MD des Halteteils HTD hinweg zum Steg ST hin und weisen in diesen Abschnitten Führungsbolzen, vorzugsweise Schraubbolzen HBD auf, welche in Führungsnuten FNO des Halteteils HTD eingreifen. Auf die Schraubbolzen HBD sind Muttern aufgeschraubt. Bei gelockerten Muttern können die Führungsbolzen HBD innerhalb der Führungsnuten verschoben und der Radträger RTD in das Halteteil HTD eingehängt oder aus diesem entnommen werden, vorzugsweise unter Zuhilfenahme der nicht mit eingezeichneten Seilwinde. Die Seitenteile des Halteteils HTD weisen vorteilhafterweise zwei vertikal gegeneinander versetzte Führungsnuten FNO, FNU auf. In der in Fig. 11 skizzierten Position sind die Führungsbolzen HBD des Radträgers RTD in die unteren Führungsnuten FNU eingesetzt. Durch Anziehen der Muttern auf den Gewinden der Führungsbolzen HBD kann der Radträger RTD bezüglich des Halteteils HTD festgelegt werden. Eine zusätzliche Festlegung des Radträgers RTD bezüglich des Halteteils HTD ergibt sich durch Anliegen der Seitenteile des Radträgers RTD mit vertikalen Kanten an dem Mittelteil MD des Halteteils HTD und/oder durch Anliegen von zusätzlichen Positionierungsbolzen ZS in den Seitenteilen des Radträgers RTD an einer Außenkante der seitlichen Schenkel des Halteteils HTD. Die Seitenteile des Radträgers RTD sind vorteilhafterweise C-förmig ausgebildet, wobei ein oberer Schenkel der C-Form die Führungsbolzen HBD trägt und mit diesen über das Mittelteil MD des Halteteils HTD zum Steg hin ragt und ein unterer horizontaler Schenkel der C-Form die Traverse trägt und diese damit zumindest teilweise unter die Vertikalprojektion des Untergurts UG des Längsträgerabschnitts verlagert.

Die Fig. 12 zeigt die Haltevorrichtung HVD der Fig. 11 in mit einem Ersatzrad in Transportstellung eingebauter Stellung, wobei bei diesem Beispiel das Ersatzrad ER2 eine Radscheibe RS mit großer Einpresstiefe und damit weiter oben liegender Radscheibe aufweist und der Radträger RTD mit den Führungsbolzen HBD in die oberen Führungsnuten FNO des Halteteils HTD eingeführt ist.

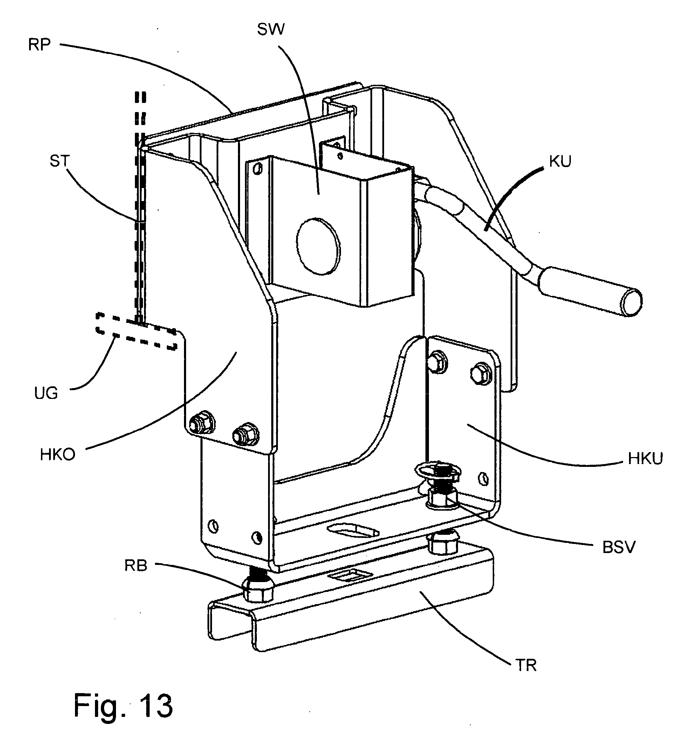

Eine weitere Ausführungsform einer Haltevorrichtung HW ist in Fig. 13 in Schrägansicht skizziert. In dieser Ausführungsform besteht das Halteteil aus einem oberen Halteabschnitt HKO, welcher in einer in Vertikalansicht zum Benutzer hin offenen U-Form ausgeführt ist und mit dem Mittelteil an dem Steg z. B. in der zu Fig. 8 bis Fig. 10 beschriebenen Weise befestigt, insbesondere verschraubt ist, wobei wieder eine Aussteifungsplatte RP auf der Rückseite des Stegs ST des mit unterbrochener Linie angedeuteten Längsträgerabschnitts befestigt, insbesondere verschraubt ist. Zwei Seitenschenkel des oberen Halteabschnitts HKO des Halteteils ragen zum Benutzer hin über den Untergurt UB hinaus und nach unten und sind mit einem unteren Halteabschnitt HKU verschraubt, wobei durch Mehrfach-Lochbilder in dem unteren Halteabschnitt HKU und/oder in dem oberen Halteabschnitt HKO der untere Halteabschnitt HKU in verschiedenen Vertikalpositionen relativ zu dem oberen Halteabschnitt HKO festlegbar ist, um wiederum verschiedene Einpresstiefen der Radscheiben zu berücksichtigen. In Fig. 13 ist der untere Halteabschnitt HKU in einer unteren Relativposition zum oberen Halteabschnitt HKO an diesem festgelegt entsprechend einer geringen Einpresstiefe der Radscheibe des Ersatzrades. Der Radträger ist in diesem Fall in besonders einfacher Ausführung als Traverse mit zwei nach oben ragenden Schraubbolzen RB ausgeführt, welche sowohl durch Schraubenlöcher der Radscheibe des nicht mit eingezeichneten Ersatzrades als auch durch Bohrungen in einem unteren horizontalen Flächenabschnitt des unteren Halteabschnitts HKU hindurchgreifen und auf welche Schraubenmuttern BSV als drehbare Befestigungselemente aufschraubbar sind.

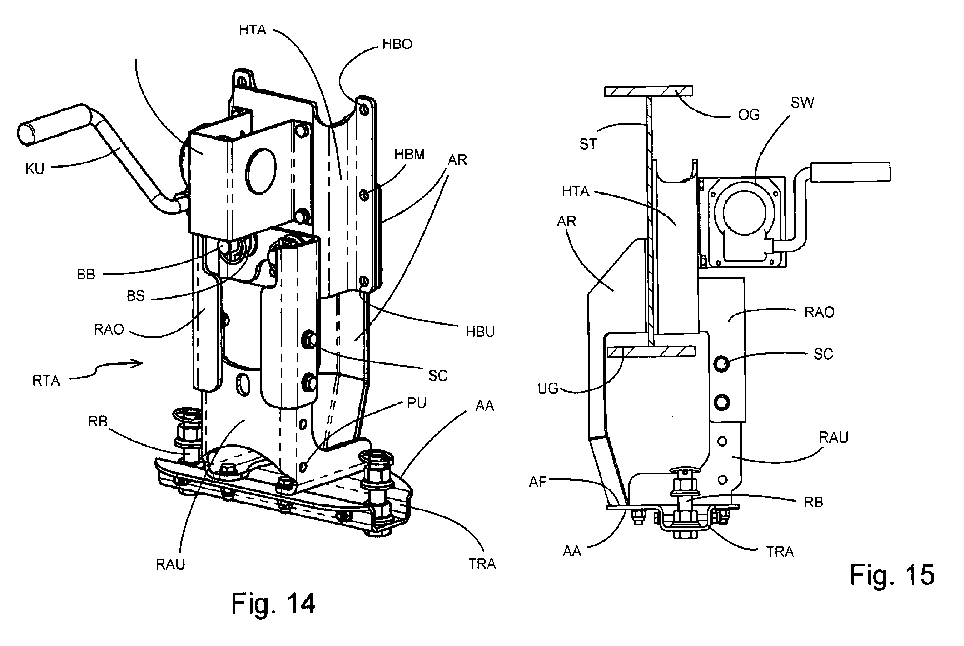

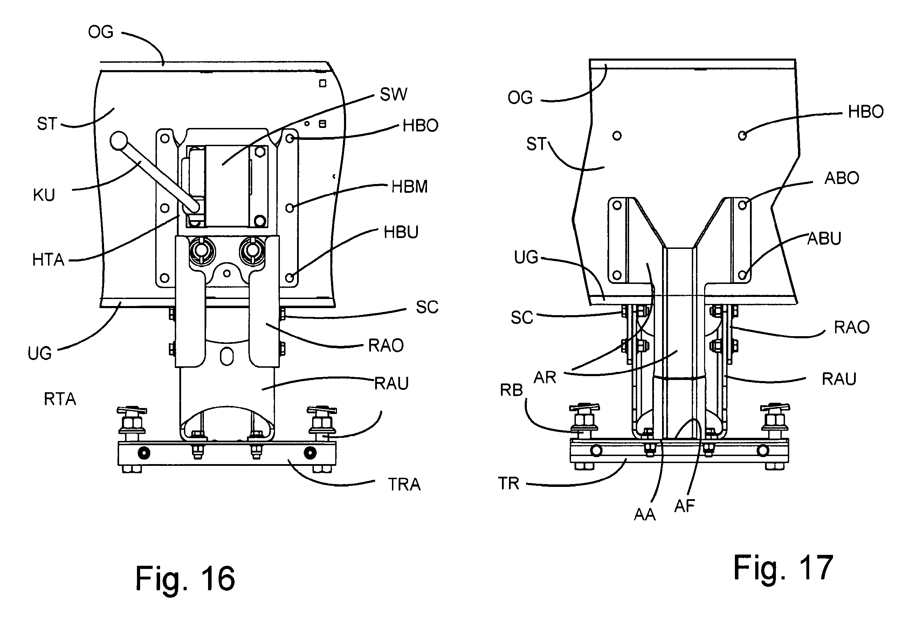

Eine besonders vorteilhafte Ausführungsform, welche zusätzliche Mittel zur Unterdrückung von Schwingungen aufweist, ist in Fig. 14 bis Fig. 18 dargestellt.

Der Aufbau der in Fig. 14 in Schrägansicht dargestellten Haltevorrichtung HVA ist ähnlich dem Aufbau der in Fig. 8 bis Fig. 10 dargestellten Haltevorrichtung. Insbesondere ist ein Radträger RTA mehrteilig aufgebaut mit einem unteren Trägerabschnitt RAU und einem oberen Trägerabschnitt RAO, welche über Verschraubungen SC und Positionierstrukturen in Form von unterschiedlich kombinierbaren Lochbildern, von welchen in Fig. 14 freie Bohrungen der zweiten Positionierstruktur PU im unteren Trägerabschnitt RAU sichtbar sind, in verschiedenen relativen Höhenpositionen zueinander fixierbar sind. Die in Fig. 14 dargestellte relative Höhenposition von unterem Trägerabschnitt RAU und oberen Trägerabschnitt RAO entspricht einer geringen Einpresstiefe. Abweichend von dem Ausführungsbeispiel nach Fig. 8 bis Fig. 10 sind an dem Halteteil HTA keine Führungsnuten, in welche Bolzen des Radträgers eingreifen könnten, vorgesehen. Die Anlagefläche des Halteteils HTA für die Seilwinde SW und für den Radträger RTA ist in diesem Ausführungsbeispiel von dem Steg ST des Längsträgerabschnitts weg zum Benutzer hin verlagert, so dass das Halteteil HTA ein Hutprofil bildet. Die Seilwinde SW ist nur an dem Mittelteil dieses Hutprofils gehalten. Die feststehenden Befestigungselemente BB in Form von Schrauben oder Gewindebolzen sind nur an dem Halteteil HTA festgelegt und ragen mit den Achsen, um welche die drehbaren Befestigungselemente drehbar aufgeschraubt werden, wie in dem Beispiel nach Fig. 1 bis Fig. 10 auf den Benutzer zu und sind wie bei dem Ausführungsbeispiel nach Fig. 8 bis Fig. 10 durch ein steckbares Werkzeug zugänglich, wofür in dem Radträger dessen Kanten teilweise ausgespart sind.

Der untere Trägerabschnitt RAU des Radträgers RTA trägt wiederum eine Traverse TRA mit nach oben weisenden Schraubbolzen RB, welche durch Schraubenlöcher der Radscheibe des Ersatzrades von unten nach oben hin durchgreifen und auf welche Radmuttern zur festen Verbindung des Radträgers mit der Radscheibe aufschraubbar sind.

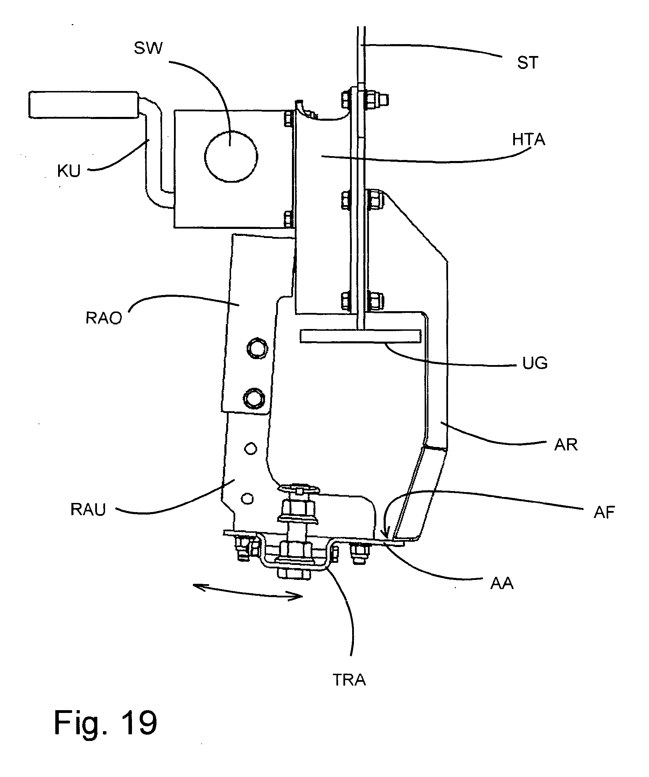

Ein besonders wesentliches Merkmal der Ausführung nach Fig. 14 ist, dass die Haltevorrichtung zusätzlich ein Stützelement AR enthält, welches auf der dem Benutzer abgewandten Rückseite des Stegs ST des Längsträgerabschnitts befestigt ist und mit einem Stützabschnitt an dem Untergurt UG vorbei nach unten ragt und sich an einer Abstützfläche AF an einen Abstützabschnitt AA der Traverse TRA anlegt, wie in der Seitenansicht nach Fig. 15 deutlich erkennbar. Das Abstützelement AR ist vorteilhafterweise gemeinsam mit den Seitenschenkeln des Hutprofils des Halteteils HTA an dem Längsträger verschraubt, wofür die Seitenschenkel des Halteteils HTA und das Abstützelement AR zueinander und zu Bohrungen im Steg ST des Längsträgerabschnitts korrespondierende Lochbilder aufweisen und Schrauben durch die Seitenschenkel des Halteteils HTA, den Steg und Bohrungen des Abstützelements AR hindurch geführt sind. Diese Verschraubungen sind in Fig. 14 bis Fig. 18 nicht mit eingezeichnet. Das Abstützelement AR ist in seinem Bereich oberhalb des Untergurts UG vorteilhafterweise gleichfalls nach Art eines Hutprofils geformt mit seitlich abstehenden Befestigungsabschnitten und einem außerhalb des Hutprofils nach unten fortgeführten Mittelteil, welches vorteilhafterweise noch eine zum Steg bzw. Untergurt UG hin offene U-Form besitzt. Im für die Transportstellung befestigten Zustand des Radträgers RTA sind der Abstützabschnitt AA und das untere Ende des Abstützelements AR an einer gegebenenfalls aus mehreren Teilflächen zusammen gesetzten Abstützfläche AF gegeneinander verspannt, wobei die Verspannungskraft vorzugsweise zumindest überwiegend vertikal gerichtet ist. Die Verspannung wird vorteilhafterweise im Rahmen der elastischen Verformbarkeit von Abstützelement AR, von Radträger RTA mit Abstützabschnitt AA und mit Traverse TRA und von Halteteil HTA während des Festziehens der Befestigungselemente zwischen Radträger RTA und Halteteil HTA erzeugt. Beim Anfügen des Radträgers RTA an das Halteteil HTA liegen anfänglich das Stützelement AR und der Abstützabschnitt AA der Traverse TRA lose aneinander und können insbesondere auch auf der Abstützfläche AF aneinander gleiten, bis die in Fig. 15 skizzierte Endposition erreicht ist. Eine Zwischenstellung mit anfänglichem losen Anliegen und leicht verkipptem Radträger ist in Fig. 19 skizziert.

Abstützelement AR, Halteteil HTA und Radträger RTA mit oberem Trägerabschnitt RAO, unterem Trägerabschnitt RAU, Traverse TRA und Abstützabschnitt AA bilden einen teilbaren Bügel um den Untergurt, wobei der Bügel durch die Verspannung eine hohe Steifigkeit besitzt und einer eventuellen Schwingungsneigung der Anordnung entgegen wirkt. Insbesondere können durch diese schwingunsgvermindernde Eigenschaft die Wandstärken der beteiligten Bauteile einschließlich des Steges ST vorteilhaft gering gehalten werden, wodurch sich Materialaufwand und Gewicht der Anordnung und auch Belastung des Stegs ST gering halten lassen.

Zur Dämpfung eventuell entstehender Schwingung können zusätzlich schwingungsdämpfende Mittel an eine oder mehrere Verbindungsstellen, insbesondere bei der Anlagefläche AF, bei der Verbindung der Traverse TRA mit dem unteren Trägerabschnitt RAU oder bei der Verschraubung des Abstützelements AR an dem Steg ST vorgesehen sein.

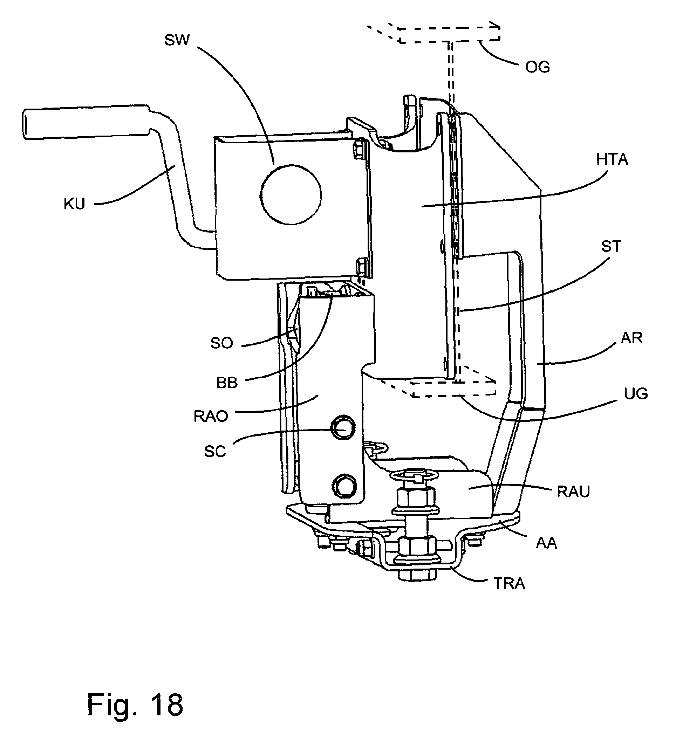

Fig. 18 zeigt eine Schrägansicht der Haltevorrichtung nach Fig. 14 mit einer höheren Relativposition zwischen unterem Trägerabschnitt RAU und oberem Trägerabschnitt RAO entsprechend einer großen Einpresstiefe der Radscheibe des Ersatzrades. Dasselbe Abstützelement AR kann in der Anordnung nach Fig. 14 und der Anordnung nach Fig. 18 verwendet werden, wenn beispielsweise das Abstützelement AR in anderer Vertikalposition an der Rückseite des Stegs ST befestigt wird, wobei vorteilhafterweise wiederum ein Lochbild der seitlichen Schenkel des Halteteils HTA mit einem Lochbild der seitlichen Abschnitte des Abstützelements AR zur Deckung bringbar ist. Hierfür kann beispielsweise das Lochbild in den Seitenabschnitten des Halteteils HTA drei in gleichbleibendem Abstand übereinander angeordnete Bohrungen HBU, HBM und HBO aufweisen, wobei der gegenseitige Abstand benachbarter Bohrungen mit dem Abstand von zwei Bohrungen ABU, ABO in den Seitenabschnitten des Abstützelements AR übereinstimmt und in der in Fig. 14 skizzierten Stellung die Bohrungen ABU und HBU bzw. ABO und HBM, in der Stellung nach Fig. 18 die Bohrungen HBM und ABU bzw. HBO und ABO in q-Richtung miteinander fluchten. In anderer Ausführung kann auch das Abstützelement AR wie der Radträger RTA vertikal zweigeteilt sein und die beiden Teile in zum Radträger RTA entsprechender Weise in verschiedenen Höhenpositionen relativ zueinander festlegbar sein. Die Verschraubungen an dem Steg müssen dann für eine andere Vertikalposition nicht geändert werden.

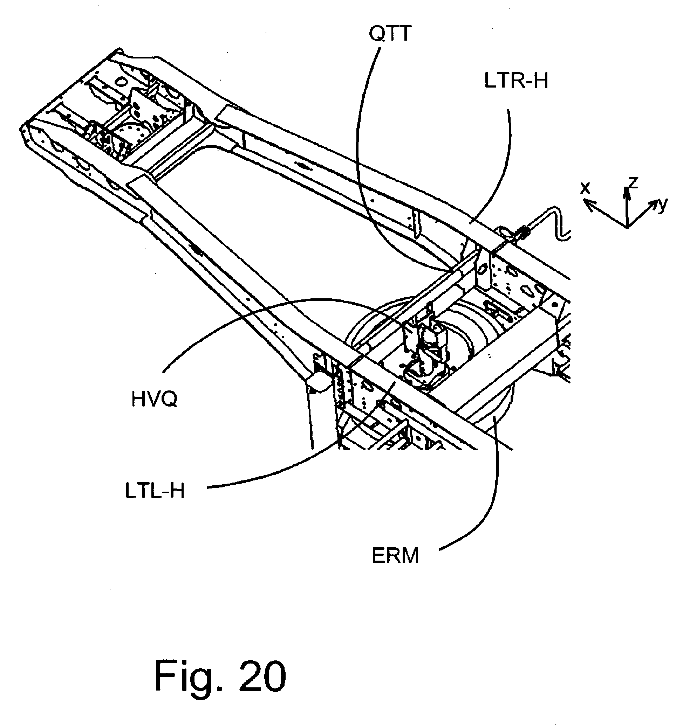

Fig. 20 zeigt ein Beispiel, bei welchem eine Haltevorrichtung HVQ einer der beschriebenen Bauarten an einem Querträger QTT eines Chassis befestigt ist und in Querrichtung zwischen zwei Längsträger. Die Haltevorrichtung kann auch am Chassis eines Zugfahrzeugs, welches typischerweise einen geringeren maximalen Seitenabstand der Längsträger und in der Regel keinen Schrägverlauf in einem Übergangsabschnitt aufweist, angeordnet sein.

## Patentansprüche

1. Nutzfahrzeuganordnung mit einem zwei quer zur Längsrichtung beabstandete jeweils einen vertikalen Steg besitzenden Längsträger (LTR, LTL) enthaltenden Chassis und mit einer Ersatzradanordnung, welche wenigstens ein Ersatzrad (ER1, ER2) und wenigstens eine Haltevorrichtung (HV), mittels welcher das Ersatzrad lösbar an dem Chassis gehalten ist, aufweist, wobei die Haltevorrichtung einen mittels einer Hebeeinrichtung anhebbaren und absenkbaren Radträger enthält, welcher in einer angehobenen Stellung bezüglich des Chassis in einer Transportstellung festlegbar ist, **dadurch gekennzeichnet, dass** in der Transportstellung das wenigstens eine Ersatzrad (ER1, ER2) unterhalb eines Längsträgers (LTR, LTL) so positioniert ist, dass die zentrale Öffnung (RO) der Radscheibe (RS) des Ersatzrads in vertikaler Projektion mit dem Längsträger überlappt, wobei
- die Längsträger (LTR, LTL) in einem hinteren, wenigstens ein Drittel der Chassis-Länge in der in Fahrtrichtung weisenden Längsrichtung ausmachenden Heckbereich (HB) im wesentlichen parallel zueinander mit einem ersten gegenseitigen Abstand (DH) und in einem in Fahrtrichtung vor dem Heckbereich liegenden Übergangsbereich (UB) unter Verringerung des gegenseitigen Abstands schräg gegen die Fahrtrichtung geneigt verlaufen und die Ersatzradanordnung (ER1, ER2) in dem Übergangsbereich (UB) angeordnet ist.

2. Nutzfahrzeuganordnung nach Anspruch 1, wobei der Radträger (RT, RTF, RTD RTA) über eine Schraubverbindung (BB, BS) mit wenigstens einem um eine Schraubachse drehbaren Schraubelement (BS), welches auf der nach außen weisenden Seite des Längsträgers oberhalb des Ersatzrades in dessen angehobener Stellung angeordnet ist, bezüglich des Chassis festlegbar ist,

3. Nutzfahrzeuganordnung nach einem der Ansprüche 1 oder 2, **dadurch gekennzeichnet, dass** der Mittelpunkt (RZ) des Ersatzrades (ER) um weniger als 100 %, insbesondere weniger als 50 % der Breite (BL) des Längsträgers (LTR) von der vertikalen Projektion des Längsträgers abweicht.

4. Nutzfahrzeuganordnung nach Anspruch 3, **dadurch gekennzeichnet, dass** der Mittelpunkt (RZ) des Ersatzrades (ER) innerhalb der Vertikalposition des Längsträgers (LTR) liegt.

5. Nutzfahrzeuganordnung nach einem der Ansprüche 1 bis 4, **dadurch gekennzeichnet, dass** die Haltevorrichtung (HV) mit einem vertikalen Steg (ST) eines Längsträgers (LTR, LTL) verbunden ist.

6. Nutzfahrzeuganordnung nach einem der Ansprüche 1 bis 5, **dadurch gekennzeichnet, dass** in der Transportstellung ein Schraubbolzen (BS) der Schraubverbindung den Radträger (RT, RTF) durchgreift.

7. Nutzfahrzeuganordnung nach einem der Ansprüche 1 bis 6, **dadurch gekennzeichnet, dass** in der Transportstellung die Schraubverbindung (BB, BS) einem zum vertikalen Steg des Längsträgers parallelen flachen Abschnitt des Radträgers gegen den vertikalen Steg (ST) des Längsträgers und/oder gegen ein mit dem vertikalen Steg verbundenes Halteteil (HAT, HTF, HTA) verspannt.

8. Nutzfahrzeuganordnung nach einem der Ansprüche 1 bis 7, **dadurch gekennzeichnet, dass** das drehbare Schraubelement eine Schraubenmutter (BS) ist und ein Gegenschraubelement durch einen nicht drehbaren Gewindebolzen (BB) gebildet ist.

9. Nutzfahrzeuganordnung nach einem der Ansprüche 1 bis 8, **dadurch gekennzeichnet, dass** eine Verbindungsanordnung (HT, HTF, HTD, HTA) fest mit dem Längsträger verbunden ist und die Festlegung des Radträgers (RT, RTF, RTD, RTA) an der Verbindungsanordnung erfolgt.

10. Nutzfahrzeuganordnung nach Anspruch 9, **dadurch gekennzeichnet, dass** Zentriereinrichtungen (FN, FNO, FNU, FB, ZS) zwischen dem Radträger und der Verbindungsanordnung vorgesehen sind.

11. Nutzfahrzeuganordnung nach Anspruch 10, **dadurch gekennzeichnet, dass** die Zentriereinrichtungen von den Verschraubungen (BB, BS) getrennt sind.

12. Nutzfahrzeuganordnung nach Anspruch 10 oder 11, **dadurch gekennzeichnet, dass** die Zentriereinrichtungen (FN, FNO, FNU, FB, ZS) den Radträger (RT; RTF, RTD) in der angehobenen Position bei gelöster Schraubverbindung (BB, BS) vertikal abstützen.

13. Nutzfahrzeuganordnung nach einem der Ansprüche 1 bis 12, **dadurch gekennzeichnet, dass** das Ersatzrad (ER1, ER2) an dem Radträger lösbar festgeschraubt (RB, RM) ist.

14. Nutzfahrzeuganordnung nach einem der Ansprüche 1 bis 13, **dadurch gekennzeichnet, dass** die Haltevorrichtung ein bezüglich des Chassis ortsfestes Abstützelement (AR) enthält, an welchem der Radträger (RTA) in der Transportstellung vertikal abgestützt ist.

15. Nutzfahrzeuganordnung nach Anspruch 14, **dadurch gekennzeichnet, dass** in der Transportstellung das Stützelement (AR) eine nach unten gerichtete Vorspannkraft auf den Radträger (RTA) ausübt.

16. Nutzfahrzeuganordnung nach Anspruch 15, **dadurch gekennzeichnet, dass** der angehobene Radträger (RTA) bei gelöster Schraubverbindung (BB, BS) ohne Vorspannkraft an dem Stützelement (AR) anliegt und das Festziehen der Schraubverbindung unter Verlagerung des Radträgers in die Transportstellung die Vorspannung erzeugt.

17. Nutzfahrzeuganordnung nach einem der Ansprüche 14 bis 16, **dadurch gekennzeichnet, dass** das Stützelement (AR) auf der dem Radträger (RAO) abgewandten Seite des vertikalen Stegs (ST) an dem Längsträger befestigt ist.

18. Nutzfahrzeuganordnung nach einem der Ansprüche 1 bis 17, **dadurch gekennzeichnet, dass** die Haltevorrichtung einen den Längsträger unten umgreifenden Bügel (RTA, AR) bildet.

19. Nutzfahrzeuganordnung nach einem der Ansprüche 1 bis 18, **dadurch gekennzeichnet, dass** die Längsträger (LTR, LTL) im Frontbereich (FB) wieder parallel zueinander verlaufen mit einem zweiten seitlichen Abstand (DF), der geringer ist als der erste seitliche Abstand (DH).

20. Nutzfahrzeuganordnung nach einem der Ansprüche 1 bis 19, **dadurch gekennzeichnet, dass** der Radträger in unterschiedlichen Vertikalpositionen der Radscheibe (RS) des Ersatzrades relativ zu dem Chassis festlegbar ist.

21. Nutzfahrzeuganordnung nach Anspruch 20, **dadurch gekennzeichnet, dass** der Radträger (RTF, RTA) in ein Oberteil (RTO, RAO) und ein Unterteil (RTU, RAU) unterteilt ist, welche in unterschiedlichen relativen Höhenpositionen miteinander verbindbar sind.

22. Nutzfahrzeuganordnung nach einem der Ansprüche 1 bis 21, **dadurch gekennzeichnet, dass** das Chassis ein Sattelauflieger-Anhängerchassis ist.

23. Nutzfahrzeuganordnung nach einem der Ansprüche 1 bis 22, **dadurch gekennzeichnet, dass** die Ersatzradanordnung zwei unabhängige voneinander an je einem der beiden Längsträger gehaltene Ersatzräder umfasst, welche nebeneinander in zumindest annähernd gleicher Längsposition angeordnet ist.

## Claims

1. Utility vehicle arrangement with a chassis containing two longitudinal members (LTR, LTL) which are spaced apart transversely with respect to the longitudinal direction and each have a vertical web, and with a spare wheel arrangement which has at least one spare wheel (ER1, ER2) and at least one retaining device (HV), by means of which the spare wheel is detachably retained on the chassis, wherein the retaining device contains a wheel carrier which is raisable and lowerable by means of a lifting device and, in a raised position, is fixable with respect to the chassis in a transport position, **characterized in that**, in the transport position, the at least one spare wheel (ER1, ER2) is positioned below a longitudinal member (LTR, LTL) in such a manner that the central opening (RO) in the wheel disc (RS) of the spare wheel overlaps in a vertical projection with the longitudinal member, wherein
- the longitudinal members (LTR, LTL) run substantially parallel to each other at a first mutual spacing (DH) in a rear region (HB) covering at least a third of the chassis length in the longitudinal direction pointing in the direction of travel and, by a reduction in the mutual spacing, run inclined obliquely counter to the direction of travel in a transition region (UB) located in front of the rear region in the direction of travel, and the spare wheel arrangement (ER1, ER2) is arranged in the transition region (UB).

2. Utility vehicle arrangement according to Claim 1, wherein the wheel carrier (RT, RTF, RTD, RTA) is fixable with respect to the chassis via a screw connection (BB, BS) having at least one screw element (BS) which is rotatable about a screw axis and is arranged on the outwardly facing side of the longitudinal member above the spare wheel in the raised position thereof.

3. Utility vehicle arrangement according to either of Claims 1 and 2, **characterized in that** the centre point (RZ) of the spare wheel (ER) deviates from the vertical projection of the longitudinal member by less than 100%, in particular less than 50%, of the width (BL) of the longitudinal member (LTR).

4. Utility vehicle arrangement according to Claim 3, **characterized in that** the centre point (RZ) of the spare wheel (ER) lies within the vertical position of the longitudinal member (LTR).

5. Utility vehicle arrangement according to one of Claims 1 to 4, **characterized in that** the retaining device (HV) is connected to a vertical web (ST) of a longitudinal member (LTR, LTL).

6. Utility vehicle arrangement according to one of Claims 1 to 5, **characterized in that**, in the transport position, a stud (BS) of the screw connection reaches through the wheel carrier (RT, RTF).

7. Utility vehicle arrangement according to one of Claims 1 to 6, **characterized in that**, in the transport position, the screw connection (BB, BS) braces a flat wheel-carrier section which is parallel to the vertical web of the longitudinal member against the vertical web (ST) of the longitudinal member and/or against a retaining part (HAT, HTF, HTA) connected to the vertical web.

8. Utility vehicle arrangement according to one of Claims 1 to 7, **characterized in that** the rotatable screw element is a nut (BS) and a counter screw element is formed by a non-rotatable threaded bolt (BB).

9. Utility vehicle arrangement according to one of Claims 1 to 8, **characterized in that** a connecting arrangement (HT, HTF, HTD, HTA) is connected fixedly to the longitudinal member, and the wheel carrier (RT, RTF, RTD, RTA) is fixed to the connecting arrangement.

10. Utility vehicle arrangement according to Claim 9, **characterized in that** centring devices (FN, FNO, FNU, FB, ZS) are provided between the wheel carrier and the connecting arrangement.

11. Utility vehicle arrangement according to Claim 10, **characterized in that** the centring devices are separated from the screw connections (BB, BS).

12. Utility vehicle arrangement according to Claim 10 or 11, **characterized in that** the centring devices (FN, FNO, FNU, FB, ZS) vertically support the wheel carrier (RT; RTF, RTD) in the raised position when the screw connection (BB, BS) is released.

13. Utility vehicle arrangement according to one of Claims 1 to 12, **characterized in that** the spare wheel (ER1, ER2) is screwed down (RB, RM) detachably on the wheel carrier.

14. Utility vehicle arrangement according to one of Claims 1 to 13, **characterized in that** the retaining device contains a supporting element (AR) which is positionally fixed with respect to the chassis and on which the wheel carrier (RTA) is vertically supported in the transport position.

15. Utility vehicle arrangement according to Claim 14, **characterized in that**, in the transport position, the supporting element (AR) exerts a downwardly directed prestressing force on the wheel carrier (RTA).

16. Utility vehicle arrangement according to Claim 15, **characterized in that**, when the screw connection (BB, BS) is released, the raised wheel carrier (RTA) bears against the supporting element (AR) without a prestressing force, and the tightening of the screw connection by shifting the wheel carrier into the transport position produces the prestressing.

17. Utility vehicle arrangement according to one of Claims 14 to 16, **characterized in that** the supporting element (AR) is fastened to the longitudinal member on that side of the vertical web (ST) which faces away from the wheel carrier (RAO).

18. Utility vehicle arrangement according to one of Claims 1 to 17, **characterized in that** the retaining device forms a clip (RTA, AR) which engages around the longitudinal member at the bottom.

19. Utility vehicle arrangement according to one of Claims 1 to 18, **characterized in that** the longitudinal members (LTR, LTL) run parallel to each other again in the front region (FB) with a second lateral spacing (DF) which is smaller than the first lateral spacing (DH).

20. Utility vehicle arrangement according to one of Claims 1 to 19, **characterized in that** the wheel carrier is fixable relative to the chassis in different vertical positions of the wheel disc (RS) of the spare wheel.

21. Utility vehicle arrangement according to Claim 20, **characterized in that** the wheel carrier (RTF, RTA) is divided into an upper part (RTO, RAO) and a lower part (RTU, RAU), which upper part and lower part are connectable to each other in different relative height positions.

22. Utility vehicle arrangement according to one of Claims 1 to 21, **characterized in that** the chassis is a trailer chassis for a semitrailer.

23. Utility vehicle arrangement according to one of Claims 1 to 22, **characterized in that** the spare wheel arrangement comprises two spare wheels which are retained independently of each other on one of the two longitudinal members in each case and are arranged next to each other in an at least approximately identical longitudinal position.

## Revendications

1. Agencement de véhicule utilitaire, comprenant un châssis comportant deux longerons (LTR, LTL) espacés transversalement par rapport à la direction longitudinale et possédant respectivement une âme verticale, et comprenant un agencement de roue de secours qui comprend au moins une roue de secours (ER1, ER2) et au moins un dispositif de retenue (HV) au moyen duquel la roue de secours est maintenue de manière amovible sur le châssis, le dispositif de retenue comportant un support de roue pouvant être relevé et abaissé au moyen d'un dispositif de levage, lequel support de roue peut être fixé dans une position de transport dans une position relevée par rapport au châssis, **caractérisé en ce que** dans la position de transport, l'au moins une roue de secours (ER1, ER2) est positionnée en dessous d'un longeron (LTR, LTL) de telle sorte que l'ouverture centrale (RO) du disque de roue (RS) de la roue de secours chevauche le longeron en projection verticale,
- les longerons (LTR, LTL) s'étendant essentiellement parallèlement l'un à l'autre suivant un premier écartement mutuel (DH) dans une région arrière (HB) représentant au moins un tiers de la longueur du châssis dans la direction longitudinale orientée dans la direction de conduite et s'étendant de manière inclinée en réduisant l'écartement mutuel obliquement par rapport à la direction de conduite dans une région de transition (UB) située avant la région arrière dans la direction de conduite, et l'agencement de roue de secours (ER1, ER2) étant disposé dans la région de transition (UB).

2. Agencement de véhicule utilitaire selon la revendication 1, dans lequel le support de roue (RT, RTF, RTD, RTA) peut être fixé par rapport au châssis par le biais d'une liaison par vissage (BB, BS) à l'aide d'au moins un élément de vissage (BS) pouvant tourner autour d'un axe de vissage, lequel élément de vissage est disposé du côté du longeron orienté vers l'extérieur, au-dessus de la roue de secours dans sa position relevée.

3. Agencement de véhicule utilitaire selon la revendication 1 ou 2, **caractérisé en ce que** le centre (RZ) de la roue de secours (ER) s'écarte de la projection verticale du longeron de moins de 100 %, en particulier de moins de 50 %, de la largeur (BL) du longeron (LTR).

4. Agencement de véhicule utilitaire selon la revendication 3, **caractérisé en ce que** le centre (RZ) de la roue de secours (ER) se situe à l'intérieur de la position verticale du longeron (LTR).

5. Agencement de véhicule utilitaire selon l'une quelconque des revendications 1 à 4, **caractérisé en ce que** le dispositif de retenue (HV) est relié à une âme verticale (ST) d'un longeron (LTR, LTL).

6. Agencement de véhicule utilitaire selon l'une quelconque des revendications 1 à 5, **caractérisé en ce qu'**un boulon fileté (BS) de la liaison par vissage vient en prise à travers le support de roue (RT, RTF) dans la position de transport.

7. Agencement de véhicule utilitaire selon l'une quelconque des revendications 1 à 6, **caractérisé en ce que**, dans la position de transport, la liaison par vissage (BB, BS) serre une section plane, parallèle à l'âme verticale du longeron, du support de roue contre l'âme verticale (ST) du longeron et/ou contre une partie de retenue (HAT, HTF, HTA) reliée à l'âme verticale.

8. Agencement de véhicule utilitaire selon l'une quelconque des revendications 1 à 7, **caractérisé en ce que** l'élément de vissage rotatif est un écrou (BS) et un élément de vissage conjugué est formé par un boulon fileté (BB) non rotatif.

9. Agencement de véhicule utilitaire selon l'une quelconque des revendications 1 à 8, **caractérisé en ce qu'**un agencement de liaison (HT, HTF, HTD, HTA) est relié solidement au longeron et la fixation du support de roue (RT, RTF, RTD, RTA) s'effectue au niveau de l'agencement de liaison.

10. Agencement de véhicule utilitaire selon la revendication 9, **caractérisé en ce que** des dispositifs de centrage (FN, FNO, FNU, FB, ZS) sont prévus entre le support de roue et l'agencement de liaison.

11. Agencement de véhicule utilitaire selon la revendication 10, **caractérisé en ce que** les dispositifs de centrage sont séparés des vissages (BB, BS).

12. Agencement de véhicule utilitaire selon la revendication 10 ou 11, **caractérisé en ce que** les dispositifs de centrage (FN, FNO, FNU, FB, ZS) supportent verticalement le support de roue (RT, RTF, RTD) dans la position relevée lorsque la liaison par vissage (BB, BS) est desserrée.

13. Agencement de véhicule utilitaire selon l'une quelconque des revendications 1 à 12, **caractérisé en ce que** la roue de secours (ER1, ER2) est vissée sur le support de roue de manière à pouvoir être desserrée.

14. Agencement de véhicule utilitaire selon l'une quelconque des revendications 1 à 13, **caractérisé en ce que** le dispositif de retenue comporte un élément d'appui (AR) fixe par rapport au châssis, contre lequel élément d'appui le support de roue (RTA) s'appuie verticalement dans la position de transport.

15. Agencement de véhicule utilitaire selon la revendication 14, **caractérisé en ce que**, dans la position de transport, l'élément d'appui (AR) exerce sur le support de roue (RTA) une force de précontrainte orientée vers le bas.

16. Agencement de véhicule utilitaire selon la revendication 15, **caractérisé en ce que** le support de roue relevé (RTA) s'applique sans force de précontrainte contre l'élément d'appui (AR) lorsque la liaison par vissage (BB, BS) est desserrée et le serrage de la liaison par vissage produit la précontrainte par déplacement du support de roue dans la position de transport.

17. Agencement de véhicule utilitaire selon l'une quelconque des revendications 14 à 16, **caractérisé en ce que** l'élément d'appui (AR) est fixé au longeron du côté de l'âme verticale (ST) opposé au support de roue (RAO).

18. Agencement de véhicule utilitaire selon l'une quelconque des revendications 1 à 17, **caractérisé en ce que** le dispositif de retenue forme un étrier (RTA, AR) venant en prise autour du bas du longeron.

19. Agencement de véhicule utilitaire selon l'une quelconque des revendications 1 à 18, **caractérisé en ce que** les longerons (LTR, LTL) s'étendent à nouveau parallèlement l'un à l'autre dans la région avant (FB), suivant un deuxième écartement latéral (DF) qui est inférieur au premier écartement latéral (DH).

20. Agencement de véhicule utilitaire selon l'une quelconque des revendications 1 à 19, **caractérisé en ce que** le support de roue peut être fixé par rapport au châssis dans différentes positions verticales du disque de roue (RS) de la roue de secours.

21. Agencement de véhicule utilitaire selon la revendication 20, **caractérisé en ce que** le support de roue (RTF, RTA) est divisé en une partie supérieure (RTO, RAO) et une partie inférieure (RTU, RAU), lesquelles peuvent être reliées l'une à l'autre dans différentes positions en hauteur relatives.

22. Agencement de véhicule utilitaire selon l'une quelconque des revendications 1 à 21, **caractérisé en ce que** le châssis est un châssis de remorque de semi-remorque.

23. Agencement de véhicule utilitaire selon l'une quelconque des revendications 1 à 22, **caractérisé en ce que** l'agencement de roue de secours comporte deux roues de secours indépendantes l'une de l'autre et maintenues sur un longeron respectif des deux longerons, lesquelles roues de secours sont disposées de manière juxtaposée à au moins approximativement la même position longitudinale.
